# EUROPEAN PATENT APPLICATION

(11) **EP 4 040 639 A1**
(43) Date of publication of application: **10.08.2022**
(21) Application number: 21466001.1
(22) Date of filing: 08.02.2021
(51) Int. Cl.: H02J 50/12, H02J 50/50

(54) **APPARATUS, IN PARTICULAR FOR WIRELESS SUPPLYING AND CHARGING**

(71) Applicant: MEGAHERTZ s.r.o., 130 00 Praha 3 (CZ)
(72) Inventor: Aizen, Karel, 350 02 Cheb (CZ)
(74) Representative: Plicka, Josef

(57) **Abstract**

A device, in particular for wireless power supply and charging, the essence of which consists in the fact that a modulated source (1) and a generator (2) of excitation signals are connected in parallel between the power source (46) and the power part of the device, which together excite the power part of the device, wherein the first and second working coils (10, 11) are connected in parallel with the first and second transistors (9, 12). The power part consists of at least one pair of the first transistor (5) or the second transistor (6) and the first choke coil (7) or the second choke coil (8), wherein the excitation signal generator (2) operates with a mark-to-space ratio ranging from 50 up to 53%.

## Description

### Technical Field

The invention relates to a device, in particular for wireless power supply and charging, which is based on the principle of direct excitation and is applicable across fields, however, its main use falls primarily into the field of electronics and electrical engineering.

### Background Art

At present, a standard connection is used for the transmission of electricity, or for charging and powering appliances, i.e. in the form of a direct connection of the appliance to the electricity distribution network. This is used mainly for its simplicity of the solution, even though such simplicity is also accompanied by a major disadvantage. Despite the fact that this solution is subject to the relevant standards, for example in terms of safety or performance requirements, there is always a real risk of its interruption or oxidation, which leads to its malfunction.

For this and other reasons, it is necessary in many areas to use the wireless path for energy transmission, for example in an unsuitable or dangerous environment, or due to some progress or comfort of such a solution.

Nowadays, it is possible to transmit information wirelessly, there are wireless devices that do not need any wires at all to transmit information, but one wire is still needed, either for its constant power supply or to charge the battery. Therefore, the wireless power or appliance charging is starting to appear as the latest technology. It concerns a replacement of the last conductor leading to the device, and thus to its complete mobility and independence from the cable connection. Of course, several physical principles with different properties and, of course, with the possibility of use and deployment in the commercial sphere can be used for wireless energy transmission.

At present, wireless power transmission can basically be divided into two groups. The first group belongs to the field of telecommunications, such as "radio". In this case, it is the transfer of a small amount of energy from the transmitter to the receiver. However, this small amount can cause a slight change in the receiver and thus recognize the code. The receiver must have its own power source, which is needed for its proper operation. Depending on the type of transmission, we can further distinguish wireless transmission into an optical, radio and sonic communication.

The optical communication works on the principle of light transmission and is used in many areas, such as an infrared communication in remote controls or sensors. The radio communication is used mainly in television transmissions, radios, but also in remote controls. The sonic or sound communication is used mainly by submarines and of course foe a verbal communication between people. Examples of the wireless communication where receivers have their own power supply and only information is transmitted are systems referred to as Bluetooth, WI-FI, IrDA, electromagnetic waves, especially laser and microwaves, attenuated waves and magnetic resonance.

The second group includes a transmitter and receiver system, where the receiver does not have any energy source of its own. This means that the transmitter transmits the energy that is needed not only to transmit the information, but also to power the receiver. However, such a system must have a high efficiency, which should not be less than 70%. The main problem of the power transmission is the efficiency, which decreases very significantly with a distance. Furthermore, there is a danger to living organisms that would occur between transmitters and receivers, but this can be eliminated by using an appropriate technology. The second group for power transmission includes the electromagnetic induction, which is the most common wireless transmission, which also ensures the conversion of electricity. It has long been used in the high energy, starting from generators in power plants, through transformers to mobile phone chargers. Their principle has been known for a long time, and therefore represents the most logical physical principle for the wireless energy transmission.

When we place an electric circuit in a magnetic field, no electric current will flow through that circuit unless the magnetic field changes over time, so if it is stationary and the electric circuit does not move. If the loop begins to move or if the magnetic field begins to change over time, an electric current will begin to flow in the circuit. By changing the magnetic field, an electric voltage begins to be induced in the coil connected to the circuit and an induced current begins to flow through the circuit. As a result, the current begins to flow through the circuit even though no power supply has been connected to it. This phenomenon is already being used and devices based on this principle are on the market. The following systems work on the principle of the electromagnetic induction.

The first system is the so-called Qi standard, which basically consists of two devices, namely a charging pad, to which an electric current is supplied, and which generates a variable magnetic field in the ambient air by means of its built-in coil, and further includes a rechargeable device whose coil is secondarily induced again by an alternating electric current. The charging portable device further directs the current and stores this transmitted energy in its battery. This system is currently used in the mobile phone charging technology. The Qi standard system can also be included in the so-called "near field" group. It works on the principle of a coupled inductive energy transfer. The efficiency of such transmission is very high, but only over short distances. At longer distances, the system is unusable due to high transmission losses. Therefore, inductive charging is suitable, for example, when placing the device on a transmitter board. Devices of this type that will be able to receive the wireless power can be very small in size.

Electromagnetic induction devices, known as "near-field" systems, also include the "Powermat" system, which successfully uses wireless chargers and cases for some mobile devices that allow wireless charging based on the electromagnetic induction. In such cases, a charging efficiency of over 90% is reported, which is comparable to the charging efficiency with cable chargers. It is easy to place a mobile phone, player or remote control on the charging "plate" and thus charge it very easily. The mobile device can be easily stored in a case that contains a receiving coil. Due to the fact that the coil is built into a thin plate, it can be inserted into the case, which makes it very easy to use. This principle is very simple, because manufacturers can use the board as a back cover for a mobile phone, for example, so the cost of production will not be too high and the design of the mobile phone does not have to change in any way. However, the Powermat system goes further with its vision and its longer-term goal is to build the charging pads, for example, in desks in offices or in kitchen cabinets. In such a case, all cables that are unsightly and often obstruct the kitchen would disappear completely, while hygiene would also be improved in general. The most ambitious project is the installation of charging pads directly into walls, floors and ceilings. In this case, no additional power cables would have to be drilled into the walls, no appliance would need wires, the TV could only be mounted on the wall and manipulated arbitrarily, extension cords would be dropped and the room could be freely adjusted, regardless of where there are built-in sockets. Such a solution would also represent a huge reduction in fire risk due to the lack of extension cords and cables. This system can be mounted on car dashboards and thus wirelessly charge devices while traveling. Induction pads can be integrated into the seat backs. Based on this solution, for example, airports can not only offer free internet, but at the same time an easy recharging of, for example, mobile phones and later even notebooks.

Another state of the art also includes the "Mat" charging pad, which is a device that can wirelessly charge devices that are placed on the pad. It can charge up to 3 devices at once. In the middle of each part, there is a small magnet that can keep the device in the right place, and thus charge it efficiently. Of course, there is an audible and visual warning and automatic shutdown of charging when the device is fully charged. So far, there is no standard for wireless charging of appliances, so no charging plates can be found in any mobile device yet. Therefore, separate housings are produced in which the respective device is inserted and is able to receive energy via charging plates. Such housings are very thin and do not increase the dimensions or weight of the appliance too much. However, each housing is specially adapted for a connector from a specific manufacturer, so it is not possible to use one housing for more appliances.

Last but not least, there is a device called "PowerCube". It is a small device that has a built-in charging pad and also contains 6 connectors, which can be used to wirelessly charge thousands of other mobile devices. The PowerCube has a huge advantage, as it is no longer necessary to store charging cables for each appliance. All mobile devices can only be charged with one small box. The device is placed on the "Mat" charging plate and a mobile device is connected to it. This will charge the device.

In essence, this group also includes the technical solution according to U.S. Pat. No. 7,880,337 B2, which also uses the principles of inductive charging.

As already mentioned above, all the above-mentioned systems, including the Qi standard system, can be included in the power transmission system within the so-called close environment, i.e. the area in the immediate vicinity of the antenna. All the advantages of these systems are based on the fact that the power cable does not require the connection of the mains cable to the mains socket. The disadvantage is in principle the efficiency of transmission, because even though this system is defined as wireless, it requires almost a contact distance to achieve its functionality. This is therefore limiting for such charging, since any increase in this distance or air gap substantially degrades the efficiency of the system. For this reason, in the case of this system, the transmission distance of the system up to 4 cm is stated in public sources. In addition, enormous losses occur due to eddy currents generated during the transfer process, which result in significant heating of metallic materials. This is the reason why devices offered in the commercial sphere declare the efficiency at a contact distance that does not exceed 50%.

The third group of power transmission devices works on the principle of resonance, using electrically coupled pairs of resonators at the same frequency and circuits connected by capacitive shear current to transmit energy. In general, the resonance can be defined as the effort of the system to oscillate at the higher amplitude, or at certain frequencies different from other frequencies, i.e. at the so-called "resonant frequencies". Thus, the resonance occurs when a system is able to store and easily transfer energy between two or more forms. The resonance phenomena therefore occur in all types of oscillations and waves, and there is also a so-called electromagnetic resonance. This subgroup includes the solution known today as WiTricity. It is a possibility of transmission by magnetic resonance of two magnetically excited spiral antennas.

### Summary of the Invention

These drawbacks are substantially eliminated by the device according to the invention, the essence of which consists in the fact that a pulse-width modulated source and an excitation signal generator are connected in parallel between the power source and the power part of the device, which together excite the power part of the device, wherein the first and second working coils are connected in parallel with the first and second transistors.

The power part of the device preferably consists of at least one pair of a first transistor or a second transistor and a first choke coil or a second choke coil.

The excitation signal generator preferably operates with an alternation in the range from 45 to 53%.

The pulse-width modulated source is preferably connected to a third choke coil and to a voltage regulator which is connected to an excitation signal generator which is connected via a series resistor to a first transistor which is connected to the first capacitor by the first working coil of the transmitter. The first capacitor can be designed as a capacitor battery composed of nine pulse capacitors connected in series-parallel.

The second operating coil of the receiver is preferably connected to the second capacitor, which is connected to a rectifier bridge formed by four diodes or four transistors, which is further connected via a filter capacitance to the consumer. A feedback module sensor can be assigned to the appliance and is wirelessly connected to a processor.

A control processor can be arranged in front of the excitation signal generator and a protective optical element can be arranged behind the excitation signal generator and a first choke coil and a second choke coil are connected to it via a series resistor and transistors, a Zener diode being arranged between the ballast and the transistors.

A first isolating transformer may be connected in front of the power section and a second isolating transformer may be connected behind the power section, the third and fourth capacitors being connected between the transistors.

The first and second choke coils may be connected to the pulse-width modulated source, which are further connected to a first capacitor which is further connected via a series resistor to a fifth diode or to a sixth diode which are connected to the first transistor or the second transistor, wherein between the fifth diode and the sixth diode Zeyer diodes and a first protective resistor and a second protective resistor are connected.

A metal object or at least one parallel LC member may be inserted between the receiver and the transmitter.

The transmitter consisting of parallel LC members can advantageously correspond in design to the receiver.

It is advantageous if at least one of the parallel LC members is provided with a ferrite element, in particular a ferrite paper or a ferrite core.

The advantage of this system is not only its high efficiency at the contact distance, but above all the very essence of the solution itself, consisting in the absence of the need for a fixed connection between the source of electricity and the appliance. In addition, the system is completely safe against living tissues and does not in itself create interference, as the emitter is not modulated. This fundamentally changes the current conditions and the overall view of the use of electricity across all areas. It opens up the possibility of using electricity in places where the existing solution is not possible in terms of the environment, is very limited or represents a large financial cost or significant discomfort. This applies, for example, to waterproof applications, use in dusty or acidic environments. In addition to its fundamental use in industry, transport and communication technologies, this solution is also clearly represented in the military technology, as well as in the field of healthcare. The advantage of this solution is therefore not only the possibility of implementation in the form of an element for wireless charging and power supply in communication or military technology, construction of cars and trucks, in the construction of buildings, possibly with reinforcement, or in so-called smart homes, but simultaneously its usability in the context of major progress and innovation in the field of healthcare, in particular in the field of prosthetics and cardiac surgery.

The system can also be used for wireless secure data communication, especially when used in the military sector to control and collect data from, for example, reconnaissance drones.

The device according to the invention operates wirelessly, whereby it is possible to change the distance between the power supply and the appliance or to create so-called "active zones" in which the device can be powered and charged. It is therefore possible, for example, to cover the area of the room without heating the materials in question and causing serious losses. The system can also be operated via shielding and, as mentioned above, can be charged in tens of kW. People and objects are not affected by the transmitted energy.

The device according to the invention has a significantly simpler design in comparison with previous technical solutions. The connection does not use any gyrators, but uses directly excited LC elements, so it is also an overall cheaper solution. In the case of the system according to the invention, the same size of LC Couplers is not necessary to achieve a high Q ratio. It is also not necessary to use the same construction of LC Couplers and materials for the receiving and transmitting parts of the device. This means that in some specific cases it may be advantageous to use different materials for the transmitter and receiver. It is a frequency-stable solution that does not react to possible fluctuations in the input voltage or temperature-dependent resistance.

The device according to the invention has a significantly higher efficiency or a Q transfer value between the "LC Couplers". The reason is the fact that this solution uses clean or simple LC members and not pairs of LC members.

The device according to the invention allows the use of higher powers on the same area, as it uses frequencies in the order of kHz without heating the living tissues. It does not need a high input voltage, nor does it "oscillate" the high voltage at the output stage, which is a great safety advantage. Due to the low input voltage, it does not affect the electronics, when standard procedures can be used if shielding is necessary. Within the transmission, the place where the transmission efficiency will be highest can be set, taking into account the material used and the geometry of the LC Coupler. In practice, this means that, if necessary, it is possible to set the distance at which the highest efficiency of energy transfer will be. The devices can be chained to each other, and in view of future technological advances in electronics, it can be said that the devices can be chained in an endless series.

A significant difference between the system of the invention and the prior art in all "near field" systems is the distance ratio in relation to the efficiency of the system. In general, the greater the distance, the lower the efficiency; in the case of the system according to the invention, however, this rule no longer applies so linearly, because the system according to the invention operates earth-free and on the basis of the principles described above.

The device according to the invention was designed for wireless charging and power supply. The system can thus be used for charging or powering devices such as notebooks, mobile phones, power banks, hand power tools, electric vehicles, or for charging and powering components inside the vehicle and the like.

The use of this system is also expected in the field of high medicine, where the system finds use mainly in communication without the need for connectors and cables in general, because the main advantage of this solution is the ability to distribute energy locally in a field or room and power specific appliances without recharging. An example is the above-mentioned artificial heart, which in the standard version requires a constant connection to a power source or battery. In contrast, our solution in the form of a room as a transmitter and a piece of clothing in the form of a carbon fiber planar antenna or carbon-based vaporized copper as a receiver would be able to power a standard artificial heart wirelessly and significantly increase the user comfort of such a device.

This system also allows the connection of smart electronics and the human body, while it does not matter what specific electronics the system supplies. The system can therefore also be used for capsule endoscopy purposes, where the probe used can be continuously powered and will thus be independent of a miniature battery. This means that much better recordings can be made. Further use of direct wireless connection is expected in special applications in space or deep-sea exploration, as well as in the military sector, or in the mining industry. In each of these sectors, great emphasis is placed on the precision, and the situation does not allow the batteries to be replaced, or their use is technically very problematic.

Regarding the use of the system in the military industry, this system can represent, above all, a significant strategic advantage over the enemy, for example in the case of the use of drones, whose masked charging platforms allow a virtually unlimited period of use of such drones. In addition, other devices can be charged via such drones. This creates a strategic advantage, which can be used, for example, in infantry units, which will always have enough energy. In addition, the system can be modulated so that data can also be transmitted with this system as part of the transmission. It will not be possible to intercept the given data or disrupt the transmission in the given situation. This, of course, means a better transfer of information between military units or an advantage in crisis situations where it will be necessary to hide or transfer strategic information. A significant advantage of this solution is the fact that it is not subject to destruction due to water, dust or chemical influences, thanks to the possibility of its complete covering and isolation from the outside environment.

It can also represent a major breakthrough in the safety and economy in the mining industry, where there are high demands on resources. In particular, lighting and small hand tools will be able to be recharged or powered directly wirelessly thanks to the spark-free system, which will reduce physical demands and logistics requirements. In addition, for example, by creating a charging wall for lamps, transmitters and possibly by connecting to other resonant modules, which can work both as a receiver and transmitter, the necessary equipment can be charged directly in the mine, without the risk of sparking and possible ignition of gases which are present.

Another example of the use of this device is the installation of the system on mast, horizontal or integrated types of transmitters for complete networking and total unification of transmission technology, thus solving the constant problem of incompatibility. This provides a simpler and in a view of a so-called electro-smog cleaner environment, as any type of transmitter can be tuned for any band and thus includes all communications, i.e. TV, radio, internet, power transmission, satellite transmission and more, without interfering with each other. This will also significantly reduce the number of super-powered antennas that significantly exceed the SAR limits and may create radio shadows, high frequency bands, and the need to locate them outside of residential areas. This use also reduces the carbon footprint of the technology as a concept. Furthermore, the technology is ready to work also within 5G networks, where the solution is no longer a receiver and transmitter, but all elements work in both modes, i.e. as so-called "repeaters". In this case, the great advantage is the practical absence of overload and huge economic savings in terms of energy consumed.

### Brief Description of the Drawings

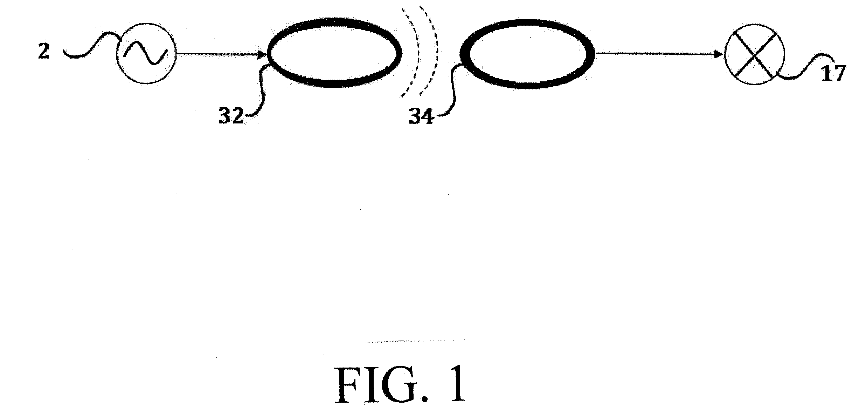

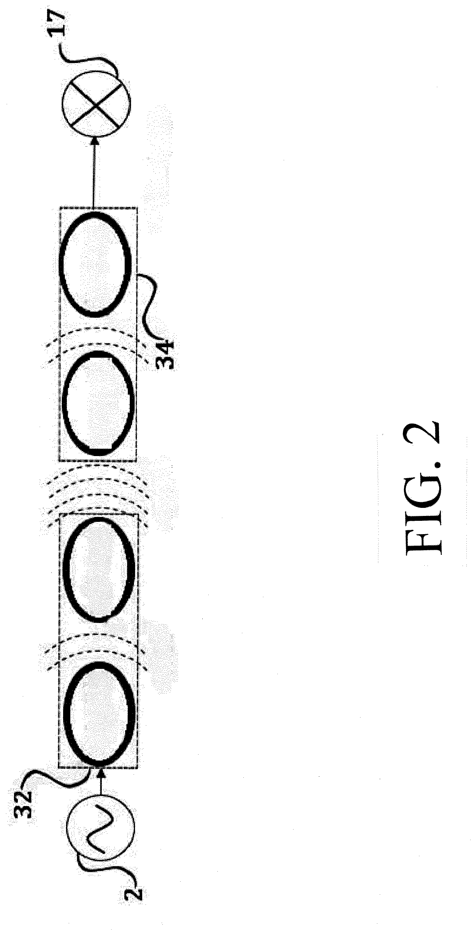

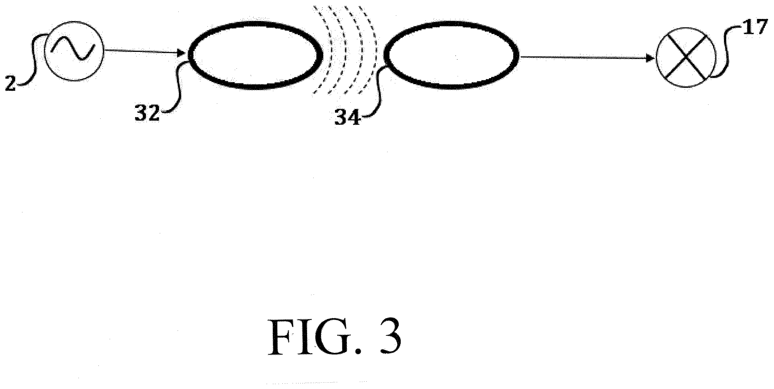

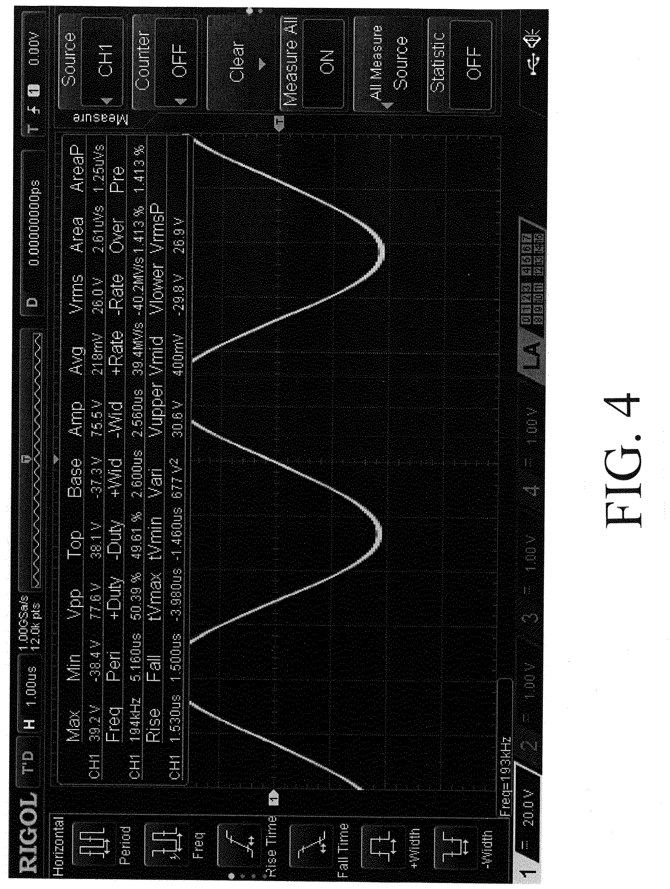

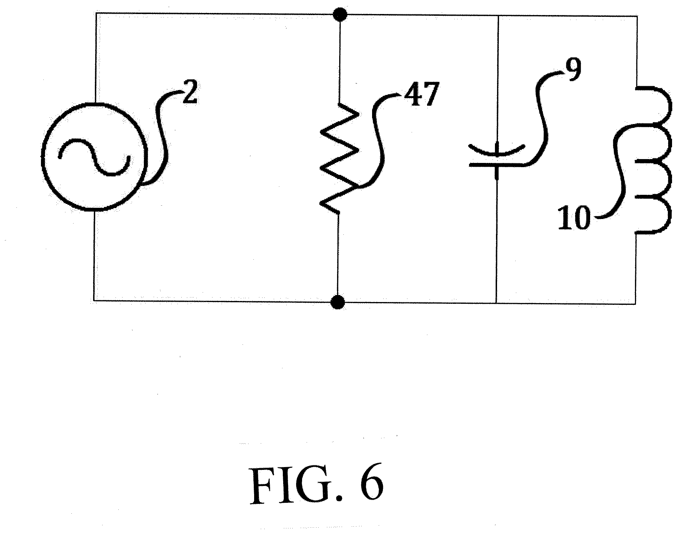

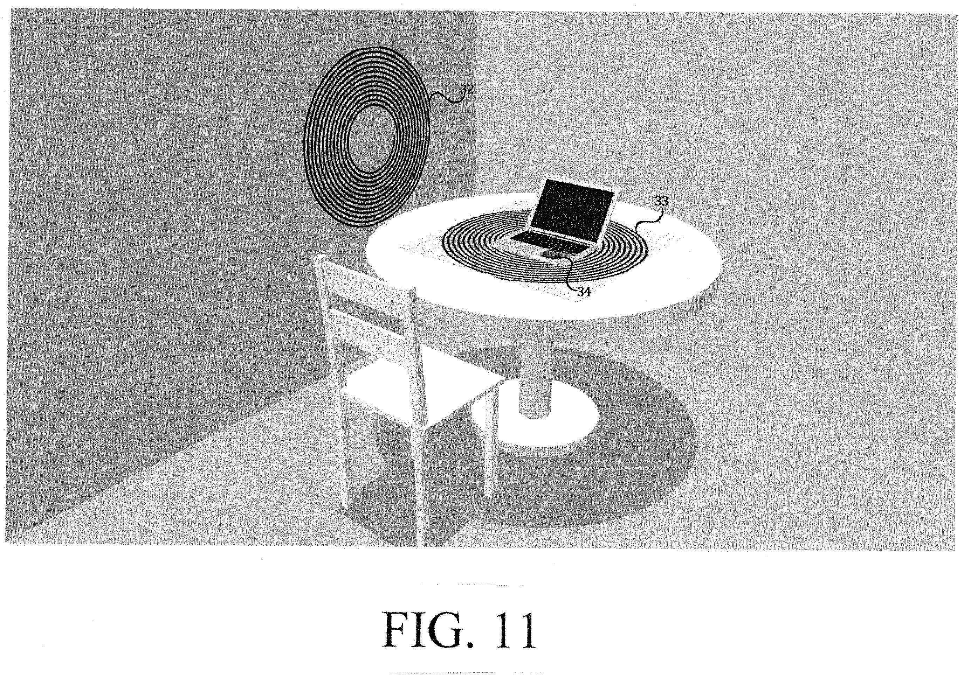

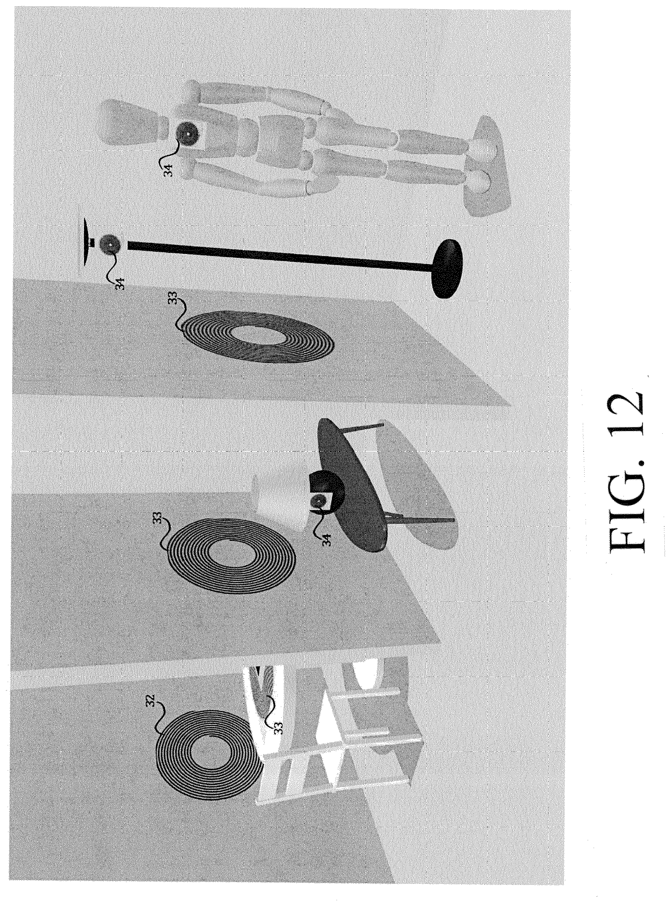

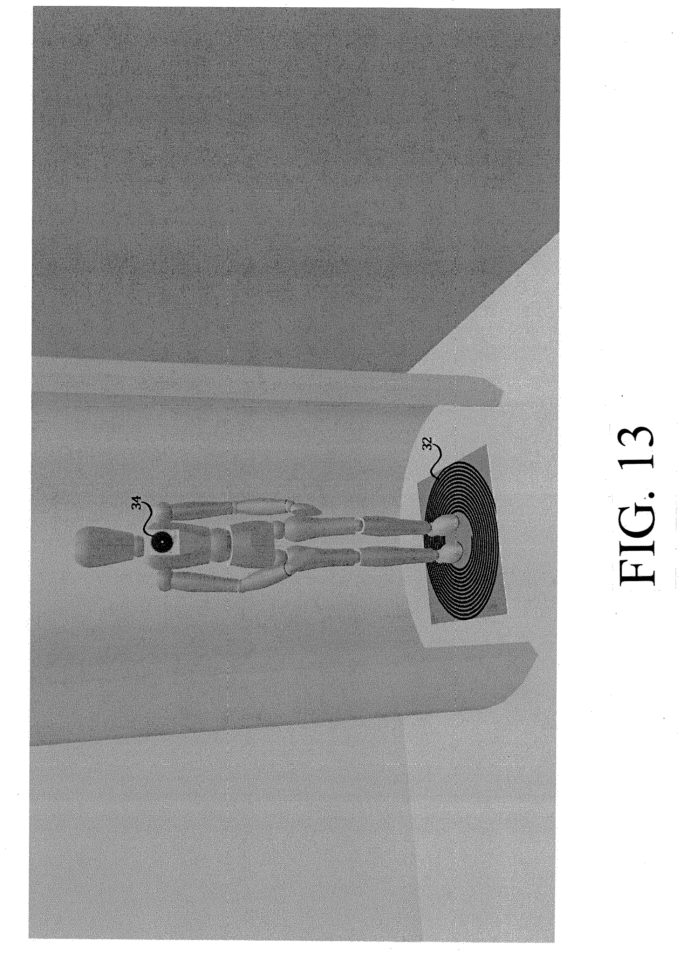

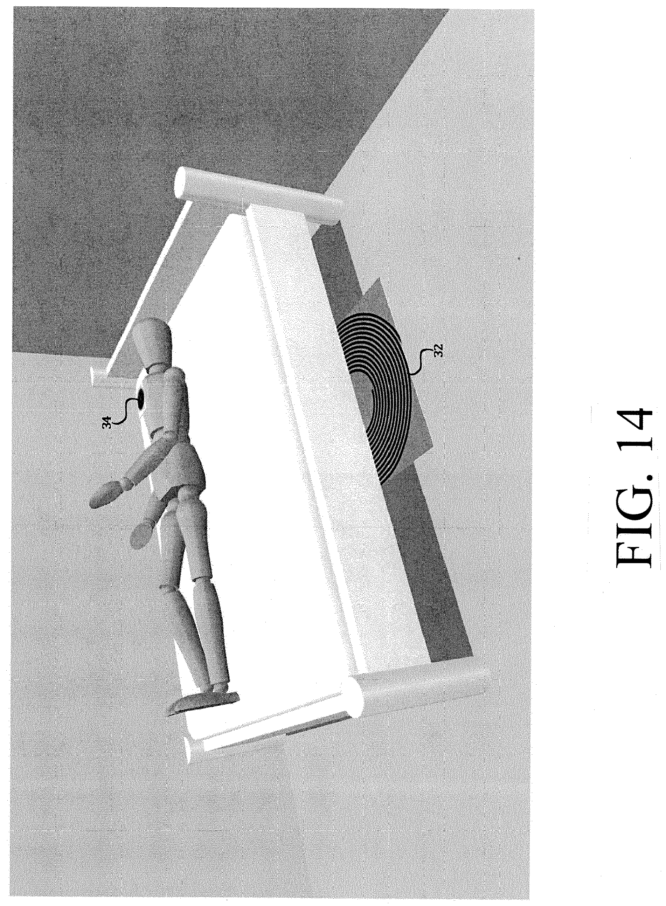

Exemplary embodiments of the present invention are illustrated in the accompanying drawings, in which Figure 1 shows schematically the energy transfer using a Qi standard in the prior art, where a low quality coefficient is applied in the case of a transmitter and a receiver. Figure 2 shows schematically the transmission of energy by means of a WiTricity system or dual system in the prior art, where a dual system is applied to the transmitter and receiver, applying a low and a high quality coefficient. Figure 3 shows schematically the transmission of energy by means of the present invention, which represents a combination of a receiver and a transmitter with a high quality coefficient. Figure 4 shows a snapshot of the measurement showing the purity of the vector on the LC member of the transmitter generated by the system. Figure 5 shows an image of a 3D wave created by the pulse-width modulation of pulses. Figure 6 schematically shows the connection of an LC member, where the resistor is connected due to the intrinsic resistance L and C. Figure 7 schematically shows a variant of the connection according to the invention using directly excited resonance with a parallel pair of LC members. Figure 8 schematically shows a variant of the invention with self-excitation with a parallel LC member and inductances controlling the power. Figure 9 schematically shows a variant of the invention with an output transformer. Figure 10 schematically shows a basic variant of the circuit of the invention. Figure 11 shows the transmission from the transmitter to the receiver by means of a repeater and the creation of a core for charging and powering. Figure 12 shows a diagram of the possibility of resonance in the so-called "repeater" mode. Figure 13 shows a diagram of a simple use of the system according to the invention and Figure 14 shows a drawing of another simple use of the system according to the invention.

### Detailed Description of the Invention

The invention provides a device for transmitting energy by direct excitation resonance by means of a pair of LC members. An LC member is considered to be a member comprising a capacitor and a coil, which may be connected in series or in parallel. One of the LC members is either always a transmitter and the other is a receiver, or they can be used as a so-called repeater, where the LC members are both a transmitter and a receiver.

The system works wirelessly, while the distance between the power source and the appliance can be changed or created so-called "active zones", in which the device can be powered and charged, for example to cover the room, all without heating the materials and serious losses. The system can also be operated via shielding, and as mentioned above. The system can charge in tens of kW, for example, cordless tools, notebooks, mobile phones and many other devices. People and objects are not affected by the transmitted energy, because the system does not resonate above the frequency-power ratio limited by the generally accepted international standard.

### Example Number 1

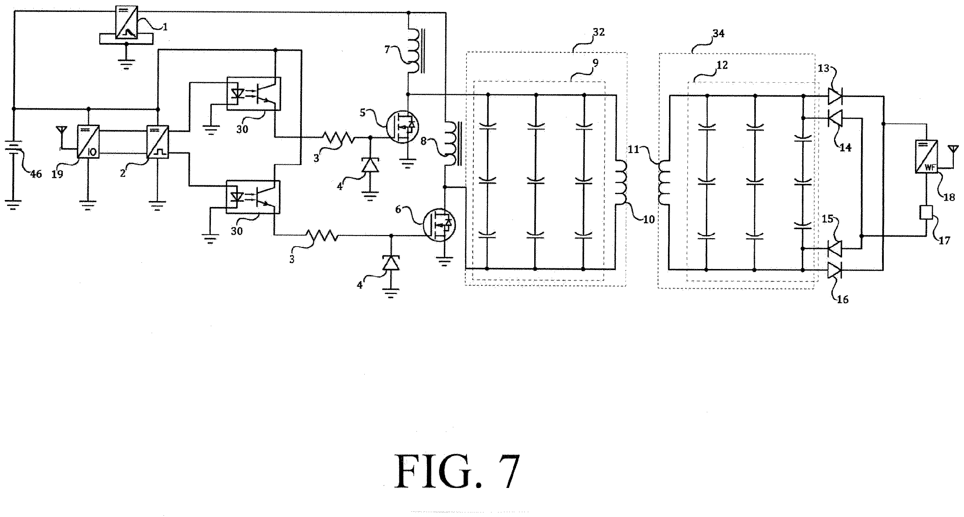

A first exemplary embodiment of the present invention is schematically illustrated in the accompanying Figure 7. A power supply 46 is applied to the voltage circuit. A positive voltage is applied to the third choke coil 22 and to the voltage regulator 45 through the pulse-width modulated source 1. The negative voltage is applied to ground. The voltage regulator 45 sets the operating voltage of the feedback processor 19 and the excitation signal generator 2, which excites the gate of the first transistor 5 via the series resistor 3, which opens it and short-circuits the third choke coil 22 against ground and thereby charges it. After closing the first transistor 5, the third choke coil 22 is discharged via the first capacitor 9 of the transmitter 32 and the first working coil 10 of the transmitter 32 against ground. As a result, the transmitter module 32 is saturated with energy and this cycle is repeated indefinitely until the power supply 46 is interrupted or disconnected based on the response of the sensor 18 of the feedback module. The first capacitor 9 of the transmitter 32 and the first working coil 10 of the transmitter 32 resonate after saturation of energy, and the first working coil 10 of the transmitter 32 releases the energy in the form of a longitudinal emission, thereby resonating the second working coil 11 of the receiver 34 and the second capacitor 12 of the receiver 34, from which energy further flows into a full rectifying diode bridge composed of a first diode 13, a second diode 14, a third diode 15 and a fourth diode 16. From these diodes a rectified voltage further flows through the filtering capacity 21, which smoothes out the voltage and provides it to the appliance 17. To adjust the parameters of the circuit in real time and to optimally adjust the energy transfer, a sensor 18 of the feedback module is further connected to the whole circuit.

This circuit is characterized by the possibility of using a very high voltage and at the same time it is a simple variant with one first transistor 5. The circuit is essentially an unmodulated amplifier in the class E.

The following explanation should be provided. The class of the amplifier is determined by the position of the operating point on the conversion characteristic of the transistor. The conversion characteristic is the dependence of the collector current on the base current. From this point of view, amplifiers are divided into 3 groups: the first basic group, i.e. linear, including classes A, B, AB, C, the second switched, i.e. pulse amplifiers, including classes D, E, S, T and the third other amplifiers, i.e. with pre-regulator, tuned, which include classes F, G, H. Amplifiers in series D are the amplifiers operating on the principle of the pulse-width modulation, technically referred to as PWM, where the input analog signal is fed to the modulator and converted to a signal with a rectangular waveform and a variable mark-to-space ratio. If the input voltage is zero, the mark-to-space ratio is 1: 1. The signal adjusted in this way excites the output transistors. The output usually includes a multi-pole LC filter. This allows to obtain from the PWM digital signal again an analog signal and at the same time to suppress higher harmonic frequencies that occur in the output signal. The output transistors operate in switching mode, which represents relatively small power losses and the resulting lower cooling requirements and much greater efficiency than exists in "simpler" Class AB devices. The Class E amplifiers are a modification of the Class D. The Class E amplifier has a parallel DC supply and its switch short-circuits the collector capacitor, which is supplied via a choke coil. The switch is controlled by an input signal and an LC circuit is located behind it.

The parallel output stage of said circuit is the first capacitor 9 of the transmitter 32 and the first working coil 10 of the transmitter 32. To protect the control electronics, we insert a voltage regulator 45 into the circuit, which in this case is a DC-DC converter, which is a pulse converter that operates in two modes, increasing or decreasing voltage. It is similar to transformers composed of semiconductors, while DC-DC converters form a separate group of sources, which is very wide from the point of view of the design and use.

The basic definition of DC converters is derived from the change in output voltage. If we need to supply circuits with a voltage lower than the supply voltage, we must use a converter with a voltage change downwards - the so-called step-down converter, which is also referred to as a "buck". Conversely, if we need to obtain a higher voltage than the source voltage, we must use a converter with voltage conversion upwards - the so-called boost converter. Because the input voltage level is different from the output voltage level during drive operation, a galvanic insulation may be required for these circuits. Using a DC-DC converter, we set the optimal voltage for the smooth operation of the feedback processor 19 and the excitation signal generator 2, and at the same time use it to reduce the actual loss of the circuit. This eliminates the use of a voltage stabilizer or power resistor, which is a highly inefficient method.

The series resistor 3 used is a classic resistor of the S24 1 W 10 Ohm series, which limits the current and voltage with a certain resistance value expressed in Ohms. The E24 series is a common international product standard that designates a multiple. The first transistor 5 can be any MOSFET or a Metal Oxide Semiconductor Field Effect Transistor, corresponding to the required power. A MOSFET is a field-controlled transistor in which the conductivity of the channel between the Source and Drain electrodes is controlled by an electric field generated in a metal-M, oxide-O, semiconductor-S with a voltage applied between the Gate and the Source. In our case, the IRF540 type with a ceiling at 50V and 40A is used, which is suitable for high-frequency excitation. IRF540 is a specific type of transistor with its own data table of values.

The third choke coil 22 used is on an AMIDON core, which is an iron powder or ferrite toroidal core with fifty laps and an inductance of 120uH at 6A. Its setting in this circuit is critical to the resonant pair, i.e. to the first capacitor 9 of the transmitter 32 and the first working coil 10 of the transmitter 32. The third choke coil 22 determines the power of the circuit and also acts as a current limiter and protects the circuit from damage. It is recommended that the third choke coil 22 have its own resonant frequency, close to the resonant frequency of the first capacitor 9 of the transmitter 32 and the first working coil 10 of the transmitter 32, thus achieving optimal circuit operation. The first capacitor 9 of the transmitter 32 itself is formed by a pulse capacitor bank composed of five capacitors, each with a value of 10nF per, 1000V, in a total value of 50nF per 1000V, thus achieving optimal conditions for the first working coil 10 of the transmitter 32, which is short-circuited with a single thread of 0.6uH copper wire. With this setting we achieve a resonant frequency of 290.5 kHz. The schematic circuit in Figure 7 is characterized by a greater transmission distance.

In the event that the first working coil 10 of the transmitter 32 and the second working coil 11 of the receiver 34 are within range of the near field of the antenna, due to the phase shift of current and voltage, a poorer energy transfer through non-ferrous metal objects occurs. The phase shift in this case is inversely proportional to the distance of the first working coil 10 of the transmitter 32 and the second working coil 11 of the receiver 34.

An increase in the transmittance of the energy fields, i.e. an increase in the transmission quality by inserting a metal object, which is not shown in the schematic figure 7, cannot be achieved if their close fields are so-called in contact. Conversely, provided that the near fields of the first working coil 10 of the transmitter 32 and the second working coil 11 of the receiver 34 are so-called out of contact, a metal object, not shown in schematic Figure 7, can be inserted between the first working coil 10 of the transmitter 32 and the second working coil 11 of the receiver 34, to increase the transmission of energy fields and thus to increase the quality of transmission. This phenomenon occurs because the insertion of a non-ferrous metal object between the first working coil 10 of the transmitter 32 and the second working coil 11 of the receiver affects the mutual impedance of the circuit, shifts the voltage back to current and generally improves transmission.

An increase in the transmission of energy fields, i.e. an increase in the transmission quality, can be further achieved by appropriately adjusting the antennas or replacing the second capacitor 12 of the receiver 34 on the receiver module 34 so that it has a different composition, an example being a capacitor array composed by 6 x 2 capacitors. i.e. 6 parallel pairs of capacitors, each of which has a value of 200nF, which offers a total capacity of 100nF with high impedance and the possibility of a high impulse load. Changing the second capacitor 12 of the receiver 34 changes the impedance of the circuit and at the same time improves the transmission quality and increases the coefficient Q closer to the value 1, where the value Q = 1 can be considered as the lossless transmission. The second working coil 11 of the receiver and the second capacitor 12 of the receiver 34, i.e. the receiver module 34, can be constructed symmetrically or modified according to the above-mentioned possibilities.

In order to rectify the alternating voltage to direct current, a complete rectifying diode bridge is connected in the circuit, consisting of rectifying diodes comprising a first diode 13, a second diode 14, a third diode 15 and a fourth diode 16. A filter capacitance 21 is connected in the circuit to smooth the voltage for the appliance 17 from which the sensor 18 of the feedback module, which monitors the current and voltage on the appliance, supplies the data of the excitation signal generator 2 via the Bluetooth technology or another second radio communication, the control processor 19 adjusting the circuit parameters with feedback in a real time for optimal operation of the device.

### Example Number 2

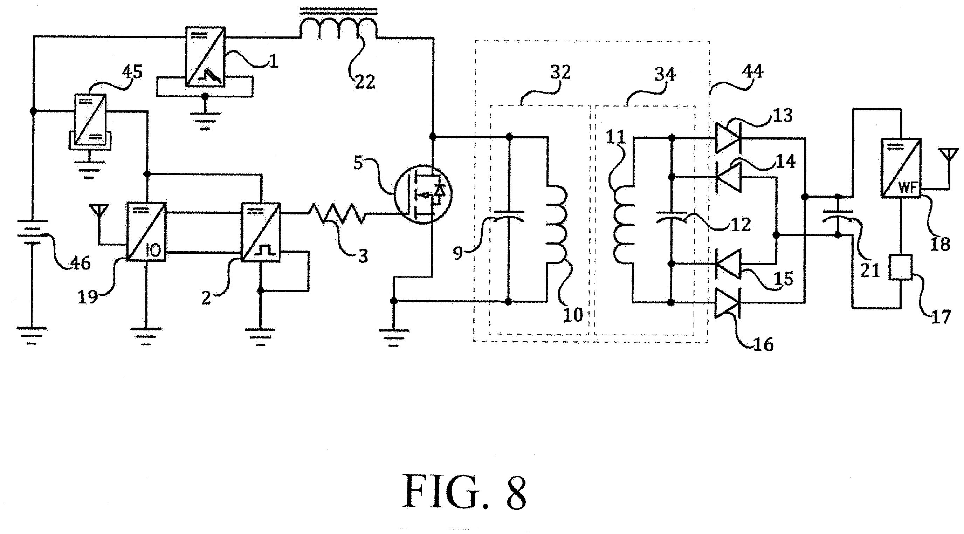

The second exemplary embodiment is schematically shown in the attached figure 8. The voltage is supplied to the circuit by a power source 46. By a pulse-width modulated source 1, the positive voltage is applied to the feedback control processor 19, the excitation signal generator 2, the protective optical element 30, the first choke coil 7 and the second choke coil 8. The negative pole of the pulse-width modulated source 1 is connected to ground. After connecting the voltage from the pulse-width modulated source 1, the control processor 19 excites after its own initialization the excitation signal generator 2, which starts to open and close the first transistor 5 and the second transistor 6 alternately via the protective optical element 30 and the series resistor 3. Two Zener diodes 4 are connected in the circuit. One is connected between the gates of the first transistor 5 and ground, the other is connected between the gates of the second transistor 6 and ground. Both Zener diodes 4 protect the gates of the first transistor 5 and the second transistor 6 against overvoltage peaks and help to close them.

In the second phase of the cycle, the signal from the excitation signal generator 2 flows through the protective optical element 30 and the series resistor 3, whereby the signal opens the second transistor 6, thus allowing the first choke coil 7, which has been charged by the pulse-width modulated source 1, to be discharged against ground via the first capacitor 9 of the transmitter 32 and first working coil 10 of the transmitter 32. At the same moment, the second choke coil 8 is saturated, namely via the second transistor 6, which then closes and thus completes the excitation cycle, i.e. full charge of the first capacitor 9 of the transmitter 32 and the first working coil 10 of the transmitter 32. Thus, the first capacitor 9 of the transmitter 32 and the first working coil 10 of the transmitter 32 are brought into a state of resonance and together as the transmitter 32 release energy in the form of a longitudinal emission. The energy is further captured by a resonant pair, namely a second working coil 11 of the receiver 34 and a second capacitor 12 of the receiver 34, in other words the receiver 34, where the captured energy is transferred by a rectifying diode bridge consisting of the first diode 13, the second diode 14, the third diode 15 and the fourth diode 16, from the alternating current to the direct current, which is further used by the appliance 17. About the entire state of its own resonance, the feedback control processor 19 receives information from the sensor 18 of the feedback module and the receiver 34 wirelessly by means of radio waves. The feedback control processor 19 thus adjusts the parameters in real time as needed for optimal power transfer from the transmitter 32 to the receiver 34. This phenomenon is repeated continuously as long as the power supply 46 is connected or until the transfer is interrupted by the feedback control processor 19, or by the user.

In this circuit variant, the feedback control processor 19 adjusts the mark-to-space ratio of the signal for the first transistor 5 and the second transistor 6, as well as the operating point by the pulse-width of the modulated source 1, and thus the transmission efficiency itself. The transmission frequency can be static or dynamic. If the receiver 32 and the transmitter 34 are located further apart, their mutual distance must be compensated by setting the operating point to the pulse-width modulated by the source 1. If the receiver 32 and the transmitter 34 are in close proximity to each other, it is more advantageous to adjust the mark-to-space ratio or its map level, or both, for the optimum between the radiated power, loss of power on the circuit and loss of power on the transmission. In general, the quality transfer coefficient Q can be adjusted closer to 1 by this procedure, wherein the value Q = 1 can be considered as lossless transmission. This whole process allows the cooperation between the feedback control processor 19, the feedback module sensor 18 and the receiver 34 and thus to adjust the real-time excitation parameters based on an algorithm, the feedback control processor software 19, which adjusts the parameters according to current load and information from the sensor 18 of the feedback module. The sensor 18 of the feedback module, which is part of the receiver 34, sends information by radio transmission back to the transmitter 32 to the feedback control processor 19, which adjusts values such as the mark-to-space ratio, voltage reference and pulse width in real time. It also selects objects that are not equipped for the reception or are just not compatible. Due to the use of the feedback control processor 19, this circuit is very stable and precise, which eliminates disharmony in transmission, reduces the number and influence of higher and lower harmonics and ensures optimal power transmission parameters for most devices where precision and stability in variable environment.

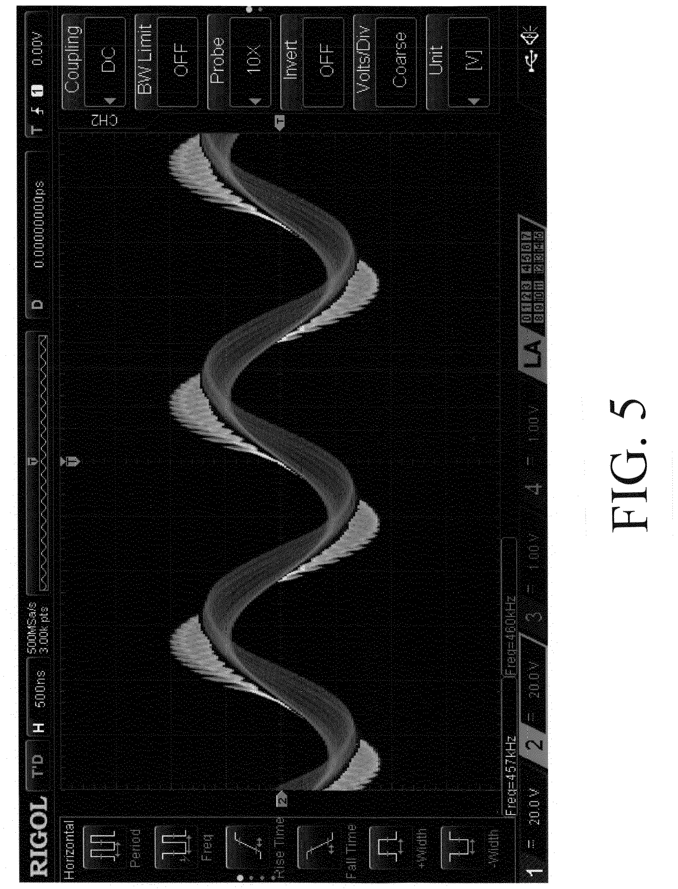

The device is excited by a pulse-width modulated source 1, which ensures optimal circuit performance and at the same time adjusts transmission properties, thus ensuring low interaction with non-ferrous metal objects, does not create eddy currents that would cause induction heating, does not cause damage to the receiver 34. The device does not cause a significant reduction in performance or a significant increase in consumption at the stillstand. At the same time, this solution allows energy to pass through some non-ferrous metal objects, allowing devices to be installed in metal structures, such as a laptop with an aluminum body, without unwanted heating. As can be seen from Figure 5, the waveform is triangular rather than usually sinusoidal.

The feedback control processor 19 is any 8-16 bit processor with a serial port of the RS-232 standard, or its last variant RS-232C, the serial ports being used as a communication interface for personal computers and other electronics. The serial port of the RS-232 standard enables the connection and mutual serial communication of two devices, i.e. the individual bits of the transmitted data are transmitted one after the other, or in series, via one pair of wires in each direction. As the feedback control processor 19, any 8-16 bit processor with UART communication interface, which is an abbreviation of the name Universal asynchronous receiver-transmitter, i.e. a computer component used for asynchronous serial transmission, can also be used, the format and speed of this transmission being configurable. The feedback processor 19 will control the excitation signal generator 2 in real time and thus adjust the excitation parameters of the first transistor 5 and the second transistor 6. Both of these transistors are excited via a protective optical element 30 or a single-chip gate driver, for example type IR2113, which is not shown in the diagram. The first transistor 5 and the second transistor 6 are of the IRFP250N type, the definition being given above in Example No. 1.

The series resistors 3 are common resistors of the E24 1W 10-20 Ohm series, the definition of which is given in Example No. 1. The Zener diodes 4 are derived from the data sheets of the individual components, from the maximum value Ugmax, which is the maximum gate voltage of the transistor. In the case of our connection from the first transistor 5 and the second transistor 6, the maximum value of Ugmax is generally 3 - 25V.

The first choke coil 7 and the second choke coil 8 are wound on special iron powder cores of the AMIDON type, the definition of said core type being described in example number 1. Both choke coils are dimensioned for circuit power and at the same time act as current limitation and thus protection of the whole circuit. In our connection, the first choke coil 7 and the second choke coil 8 have a value of 120uH at 5A.

The first capacitor 9 of the transmitter 32 is a condenser battery, which is composed of nine polypropylene pulse capacitors connected 3x3 in series, each with a value of 100nF at 1600V. This composition allows high current load and temperature stability.

The first working coil 10 of the transmitter 32 is designed as a short thread, copper tube or litz wire to withstand a current load and to be optimized for the power transfer needs of a given application. In our case, it is a coil with a value of 2uH, based on the usual formula.

The receiver 34 should preferably be constructed symmetrically with respect to the transmitter 32. If this is not possible, it is necessary to operate in the ratios 1: 1, 1: 2, 1: 4, 1: 8 and so on, which may in some cases adversely affect transmission quality.

A rectifier diode bridge composed of a first diode 13, a second diode 14, a third diode 15 and a fourth diode 16 can be constructed of conventional rectifier diodes or Shottky diodes, which is a special type of high speed diode intended for use in high frequency circuits. This type of diode is more accurate and, in general, this diode is more resistant to reverse current breakdown. In some cases, these diodes have a smaller series voltage drop across the p-n junction, which is a basic component of all semiconductors, and therefore show less circuit losses and better efficiency. The optimal solution would be to use a rectifying diode bridge consisting of four transistors, because the voltage drop would then drop to 0.1-0.2V, compared to a conventional design with diodes that have a voltage drop of 0.7-1.2V.

The sensor 18 of the feedback module can be in the form of any wattmeter with the possibility of measuring the frequency with serial-radio communication, for example via the Bluetooth technology.

### Example Number 3

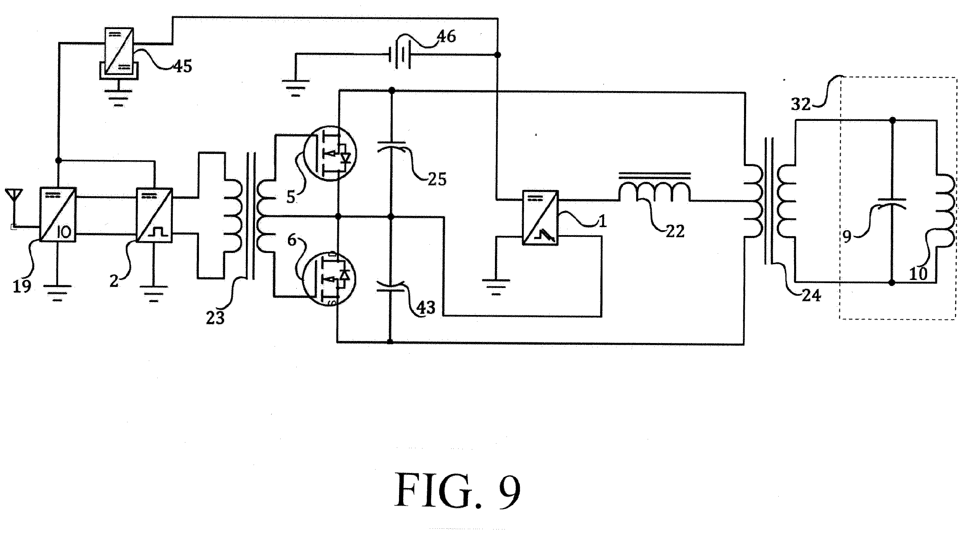

A third exemplary embodiment of the invention is schematically shown in the accompanying Figure 9. A power supply 46 is applied to the circuit. By applying a pulse-width modulated source 1, we apply a positive voltage to the third choke coil 22 and the excitation signal generator 2. We connect the negative voltage to ground. After initialization, the excitation signal generator 2 starts to generate pulses which excite the first isolation transformer 23 and against the common ground the first isolation transformer 23 starts to alternately open and close the gates of the first transistor 5 and the second transistor 6.

In the first phase, the first transistor 5, excited by the excitation signal generator 2 via the first isolation transformer 23, opens, and energy begins to flow from the third capacitor 25 through half the winding of the second isolation transformer 24 and the third choke coil 22 to ground. The induced energy at half of the second isolation transformer 24 passes to the first capacitor 9 of the transmitter 32 and to the first working coil 10 of the transmitter 32. Meanwhile, the fourth capacitor 43 is charged and the first transistor 5 closes.

In the second phase, the second transistor 6, excited by the excitation signal generator 2, opens via the first isolation transformer 23, releasing the energy stored in the fourth capacitor 43 and starting to flow through the second half of the second isolation transformer 24 and the third choke coil 22 back to ground. The energy induced on the second isolating transformer 24 is stored in the first capacitor 9 of the transmitter 32 and in the first working coil 10 of the transmitter 32. This process begins to charge the third capacitor 25 and closes the second transistor 6, thus ending one complete cycle. The first capacitor 9 of the transmitter 32, which is charged with energy from both phases, resonates with the first working coil 10 of the transmitter 32 and thus releases energy in the form of longitudinal emission.

This type of connection is more suitable in places with lower demands on accuracy or transmission quality or for industrial use, where the occurrence of smaller eddy currents, the effect of the radiant field of the antenna is not a problem, and where a particularly high frequency is not required. This is a relatively simple construction with a first transistor 5 and a second transistor 6, both transistors being of the IRFZ44 or IRLB3034 type. The protective optical element 30, the series resistors 3 and the protective Zener diodes 4 are not connected in the circuit due to excitation by the first isolating transformer 23, which admittedly largely eliminates gate excitation problems, but cannot be used everywhere because the mark-to-space ratio is practically always 50% to 50% or 1: 1, which may not always be advantageous. The third capacitor 25 and the fourth capacitor 43, which are used with the third choke coil 22, serve as power control and current limiting. The third capacitor 25 and the fourth capacitor 43 can be electrolytic or ceramic, depending on the input voltage used. In principle, they must be able to withstand current loads. Capacitor batteries can be designed on both sides of the circuit for this purpose. In our case, the third capacitor 25 and the fourth capacitor 43 have a value of 3300uF per 100V.

The third choke coil 22 limits the circuit current and thus protects the components from overload. In this case, the third choke coil 22 has a value of 150uH.

The second isolating transformer 24 has a thread ratio of 5:5:20, which gives a voltage four times higher than the excitation voltage. This is more advantageous due to the lower current load requirements of the resonant pair of transmitter 32, i.e. the first capacitor 9 of the transmitter 32 and the first working coil 10 of the transmitter 32. At the same time the components are dimensioned so that the nominal voltage of first capacitor 9 of transmitter 32 takes into account voltage peaks from the second isolating transformer 24 to prevent the dielectric of the first capacitor 9 of the transmitter 32 from breaking, which would result in the destruction of the circuit and the loss of the power transfer function.

The circuit uses a powerful pulsed polypropylene first capacitor 9 of the transmitter 32 with a value of 330nF to 2500V, designed for continuous pulse loading, and a first working coil 10 of the transmitter 32, which consists of a copper tube or solid wire, with an inductance of 0.5-2uH, thus achieving a frequency range from 120-185 kHz.

### Example Number 4

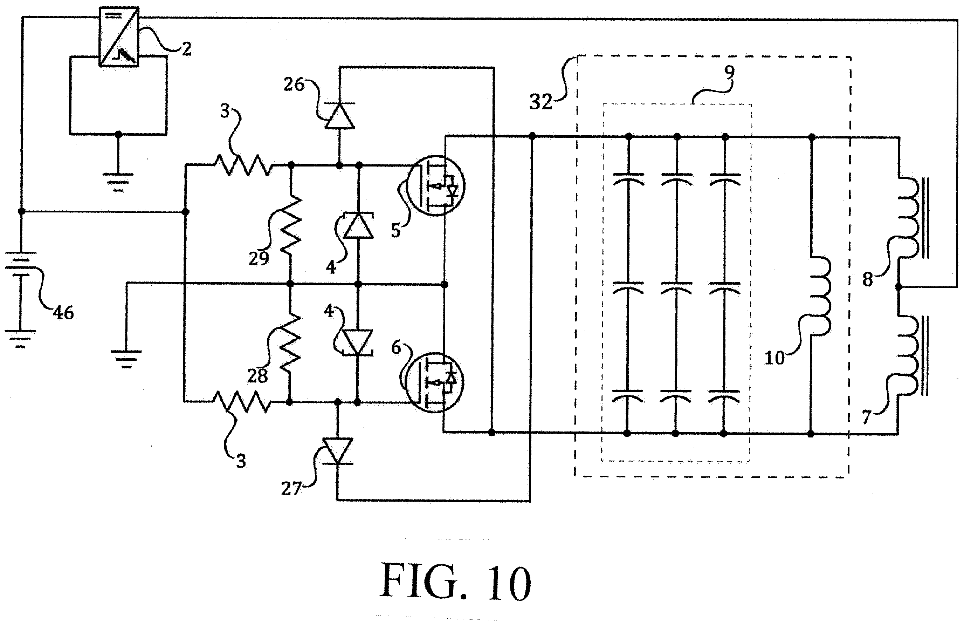

A fourth exemplary embodiment of the invention is schematically shown in the attached figure 10. Via the power supply 46, the voltage is applied to the circuit, said voltage being further supplied by the pulse-width modulated source 1 to the positive and negative terminals of the circuit. In doing so, the positive terminal is connected to the first choke coil 7 and to the second choke coil 8 and the negative terminal is connected to a common terminal or ground. Energy further flows through the series resistors 3 to the gates of the first and second transistors 5 and 6, one of which being opened earlier and the oscillations initiate. Due to the slight differences in the components during production, it is not possible to define which of the said transistors opens first. In the first half of the cycle, one of the transistors, i.e. either the first transistor 5 or the second transistor 6, opens, and current begins to flow from the pulse-width modulated source 1 through the first choke coil 7 or the second choke coil 8, depending on which of the listed transistors opens first. Next, the current flows into the first capacitor 9 of the transmitter 32, which can be designed as a capacitor battery.

At the same time, the current flows through the second part of the symmetrical circuit to ground, namely through the series resistor 3 and the fifth diode 26 or the sixth diode 27. In this particular connection have been used Shottky diodes, the definition of which has been given above in the description of example 2. The fifth diode 26 and the sixth diode 27 are connected to the gate of the first transistor 5 or to the gate of the second transistor 6, thus keeping these transistors closed. By means of the first protective resistor 28 or the second protective resistor 29, the circuit is further secured against the internal capacitance of the transistors and the gates of the first transistors 5 and the second transistor 6. In the second half of the cycle, everything is repeated, but symmetrically and vice versa. After the completion of both cycles, the first capacitor 9 of the transmitter 32 is charged in the circuit. This starts to resonate with the first working coil 10 of the transmitter 32. This releases energy in the form of longitudinal emission.

The circuit used is a type of collector resonant oscillator, which is advantageous for its simplicity, its own oscillation and the minimum necessary components. The first and second choke coils 7 and 8 are connected in the circuit to maintain high frequency oscillations and, in addition to supplying the circuit, also to limit the current to an acceptable level. The value of the inductance should be relatively large, for example in the range of about 2-10 mH. If no choke coil is used or its inductance is too low, the circuit could fail and stop working. The series resistors 3 are also connected in the circuit, which are common resistors of the E24 1 W 20-470 Ohm series. The value of these resistors will determine how fast the first transistor 5 and the second transistor 6 will oscillate. This value should be reasonably low. However, the value should not be too small, i.e. the resistance should not fall below the value that would block the oscillation of the circuit, because the current will short-circuit through the fifth diode 26 or the sixth diode 27 to ground via the series resistor 3 when the transistor from the other half of the circuit will be opened. The fifth diode 26 and the sixth diode 27 serve to discharge the gates of the first and second transistors 5 and 6 and thus allow one transistor of the pair to oscillate in each case. These should be low voltage drop diodes which allow the gates of the first and second transistors 5 and 6 to discharge well and the transistor to close completely. The rated voltage of the fifth diode 26 and the sixth diode 27 must be sufficient to withstand an increase in voltage in the resonant circuit, in this case up to 100 V. Therefore, Schottky diodes are used in the circuit. Zener diodes 4 with closing voltage U 16V are also connected to the circuit, which serve against overvoltage peaks and for protection of gates of first and second transistors 5 and 6. At the same time, the first protection resistor 28 and the second protection resistor 29 with value 1KOhm are connected to the circuit. They compensate the influence of the transistor gate's own capacity and prevent unwanted oscillations or deformation of the input or output signal, said protective resistors also serving as resistive dividers for the gates of the first and second transistors 5 and 6. The first and second transistors 5 and 6 have nominal voltage 100V 35A and are of the type MOSFET as defined above in the previous examples. Both said transistors are mounted on heat sinks, although this circuit is characterized by zero switching, so that said transistors are practically not heated. Due to losses, fast response and the possibility to use a higher frequency, the most suitable transistors have a very low transient resistance between the gate-drain and drain-source transient links.

The first capacitor 9 of the transmitter 32 and the first working coil 10 of the transmitter 32 form a resonant circuit. Together they must withstand large impulsive currents and temperatures. Several 330nF polypropylene capacitors were used for this connection, from which a capacitor battery has been formed. The first working coil 10 of the transmitter 32 must be made of thick wire or tube because large high frequency currents will be induced in it. Copper tubes or wires are suitable because high frequency energy flows on the surface of the coil. For outputs above 1-3 KW, additional cooling with water is possible, wherein cooling water is pumped by the antenna, which can be a copper tube for a better temperature-frequency structure. The first capacitor 9 of the transmitter 32 must be connected in parallel to the first working coil 10 of the transmitter 32, thus forming the resonant circuit. The combination of inductance and capacitance must have a specific resonant frequency to which the circuit is automatically tuned. The combination of the first working coil 10 of the transmitter 32 and the first capacitor 9 of the transmitter 32, used in said circuit, resonate to a value of about 200 kHz. This creates a longitudinal wave emission that acts as a carrier for the energy, but at the same time as coupling to resonance with the receiver 34 and exciting energy to its working coil without the actual transmission of energy.

### Industrial Applicability

The device according to the invention can be used for the purposes of wireless charging and power supply practically without any restriction. The devices can be used for charging or powering appliances as notebooks, mobile phones, power banks, hand power tools, electric vehicles, or for charging and powering things inside the vehicle and the like.

The system can be also used in the field of high medicine, where the system finds use mainly in communication without the need for connectors and cables, while the main advantage of this solution is the ability to locally distribute energy in a field or room and power specific appliances without recharging.

### List of Reference Signs

- 1: pulse-width modulated source
- 2: generator
- 3: series resistor
- 4: Zener diode
- 5: first transistor
- 6: second transistor
- 7: first choke coil
- 8: second choke coil
- 9: first capacitor
- 10: first working coil
- 11: second working coil
- 12: second capacitor
- 13: first diode
- 14: second diode
- 15: third diode
- 16: fourth diode
- 17: appliances
- 18: sensor
- 19: processors
- 21: filtration capacity
- 22: third choke coil
- 23: first isolation transformer
- 24: second isolation transformer
- 25: third capacitor
- 26: fifth diode
- 27: sixth diode
- 28: first protective resistor
- 29: second protective resistor
- 30: protective optical element
- 32: transmitter
- 34: receiver
- 43: fourth capacitor
- 45: voltage regulator
- 46: power supply

## Claims

1. A device, in particular for wireless power supply and charging, which consists of a source, a power part of the device, a transmitter and a receiver, **characterized in that** a pulse-width modulated source (1) and an excitation signal generator (2) are connected in parallel between a power source (46) and the power part of said device, which together excite the power part of the device, wherein the first and second working coils (10, 11) are connected in parallel with the first and second capacitors (9, 12).

2. The device, in particular for wireless power supply and charging, according to claim 1, **characterized in that** the power part consists of at least one pair of a first transistor (5) or a second transistor (6) and a first choke coil (7) or a second choke coil (8).

3. The device, in particular for wireless power supply and charging, according to claim 1, **characterized in that** the excitation signal generator (2) operates with a mark-to-space ratio in the range from 45 to 53%.

4. The device, in particular for wireless power supply and charging, according to claim 1, **characterized in that** the pulse-width modulated source (1) is connected to a third choke coil (22) and to a voltage regulator (45) which is connected to the excitation signal generator (2), which is connected via a series resistor (3) to the first transistor (5), which is connected to the first capacitor (9) and to the first working coil (10) of the transmitter (32).

5. The device, in particular for wireless supply and charging, according to Claim 4, **characterized in that** the first capacitor (9) is designed as a capacitor battery consisting of nine pulse capacitors connected in series and in parallel.

6. The device, in particular for wireless supply and charging, according to claim 1, **characterized in that** the second working coil (11) of the receiver (34) is connected to a second capacitor (12) which is connected to a rectifier bridge formed by four diodes (13, 14, 15, 16) or four transistors, said rectifier bridge being further connected via a filter capacitor (21) to an appliance (17).

7. The device, in particular for wireless power supply and charging, according to claims 1 and 5, **characterized in that** a sensor (18) of the feedback module is associated with the appliance (17), which is wirelessly connected to the processor (19).

8. The device, in particular for wireless power supply and charging, according to Claim 1, **characterized in that** a control processor (19) is arranged upstream of the excitation signal generator (2) and a protective optical element (30) is arranged downstream of the excitation signal generator (2), and the first choke (7) and the second choke (8) is further connected to it via the resistor (3) and transistors (5, 6), wherein a Zener diode (4) is arranged between the series resistor (3) and transistors (5, 6).

9. The device, in particular for wireless supply and charging, according to claims 1 and 2, **characterized in that** a first isolation transformer (23) is arranged upstream of the power part of the device and a second isolation transformer (24) is arranged downstream of the power part of the device, wherein a third capacitor (25) and a fourth capacitor (43) are arranged between the transistors (5, 6).

10. The device, in particular for wireless supply and charging, according to claim 1, **characterized in that** first and second choke coils (7, 8) are connected to the pulse- width modulated source (1), which are further connected to a first capacitor (9), which is further connected via the series resistor (3) to a fifth diode (26) or to a sixth diode (27), which are connected to the first transistor (5) or the second transistor (6), wherein between the fifth diode (26) and the sixth diode (26, 27) the Zener diodes (4) and a first protective resistor (28) and a second protective resistor (29) are connected.

11. The device, in particular for wireless power supply and charging, according to claim 1, **characterized in that** a metal object or at least one parallel LC member is inserted between the receiver (34) and the transmitter (32).

12. The device, in particular for wireless power supply and charging, according to claim 1, **characterized in that** the transmitter (32) consisting of parallel LC members structurally corresponds to the receiver (34).

13. The device, in particular for wireless power supply and charging, according to claim 1, **characterized in that** at least one of the parallel LC members is provided with a ferrite element, in particular a ferrite paper or a ferrite core.
